# EUROPEAN PATENT SPECIFICATION

(11) **EP 1 307 735 B1**
(45) Date of publication and mention of the grant of the patent: **05.11.2008**
(21) Application number: 01944981.8
(22) Date of filing: 26.06.2001
(51) Int. Cl.: G01N 30/14, C02F 11/04, C02F 3/28

(54) **METHOD AND EQUIPMENT FOR MONITORING SYNTROPHIC RELATIONS IN A BIOLOGICAL PROCESS FLUID**
VERFAHREN UND GERÄT ZUR ÜBERWACHUNG SYNTROPISCHER RELATIONEN IN EINEM BIOLOGISCHEN PROZESSFLUID
PROCEDE ET DISPOSITIF PERMETTANT DE CONTROLER LES RELATIONS SYNTROPHIQUES DANS UN FLUIDE DE TRAITEMENT BIOLOGIQUE

(30) Priority: 29.06.2000 DK 200001013
(43) Date of publication of application: 07.05.2003
(73) Proprietor: BioGasol IPR ApS, 2970 Hoersholm (DK)
(72) Inventor: PIND, Peter, Frode, 2820 Gentofte (DK); AHRING, Birgitte, Kiaer, 2970 Hoersholm (DK)
(74) Representative: Nielsen, Henrik Sten
(86) International application number: PCT/DK2001/000446
(87) International publication number: WO 2002/001220

(56) References cited:
- EP-A- 0 757 017
- DATABASE DIALOG INF. SERVICES [Online] File 103, Energy SciTec, February 1994 (1994-02) S. TORP ET AL : "Development of an on-line gas chromatographic measuring system for volatile fatty acids (VFA) determination and automated regulation of biogas reactors with regard to specific VF acids" XP002902101
- J W PAUL ET AL: "Rapid-extraction and analysis of volatile fatty acids in soil" COMMUN. IN SOIL SCI. PLANT ANAL., vol. 20, no. 1,2, 1989, pages 85-94, XP002902102
- L E RIPLEY ET AL: "Improved alkalimetric monitoring for anaerobic digestion of high-strength wastes" JOURNAL WPCF, vol. 58, May 1986 (1986-05), pages 406-411, XP002902103

## Description

### Field of the invention.

The present invention relates to a method and an equipment for monitoring syntrophic relations in a biological process fluid. More specifically it relates to a method for monitoring the syntrophic relations between different parts of the bacterial consortium in the process fluid of a biological process plant, such as a biological gas plant or waste water treatment plant and an equipment for use in such a method.

### Background of the invention.

Increasing industrial application of biological process fluids, such as in waste water treatment and biogas production, has resulted in a need for development of reliable methods for evaluation and control of the anaerobic digestion process.

Monitoring of the process first of all requires access to a suitable parameter reflecting the metabolic state of the process. Secondly, it requires a system providing reliable determination of this process parameter in order to obtain efficient control, with the shortest possible delay between process failure and operator response.

Anaerobic digestion is a complex process consisting of a series of microbial reactions catalyzed by a consortium of different bacteria, each of which depends on syntrophic relations to other bacteria in the consortium. Carbon is the only available reducing agent during anaerobic digestion, and the overall driving force of the process is the division of organic matter into CO₂ as oxidized carbon and CH₄ as reduced carbon. In spite of the inherent complexity of the process a three-step description has proven successful. In the first step biological polymers are hydrolyzed by extracellular enzymes of fermentative bacteria, and the resulting monomers and oligomers are further absorbed and fermented into long chain fatty acids, alcohols and H₂/CO₂. In the second step alcohols and long chain fatty acids are oxidized into acetate, formate and H₂/CO₂ by the acetogenic bacteria. In the third step acetate, formate and H₂/CO₂ are converted into methane by the methanogenic bacteria. The mutual interdependence of the different bacteria, normally referred to as syntrophy or syntrophic relations, is a key factor in the biogas process, and in order for the process to function properly the interdependent growth and product formation of the different bacteria must be balanced accordingly. Under conditions of unstable operation, intermediates such as volatile fatty acids and alcohols accumulate at different rates depending on the substrate and the type of perturbation causing instability (Alllison, J. M. 1978. Appl. Environ. Microbiol. 35:872-877; Gujer, W and A. J. B. Nehnder. 1983. Water Sci. Technol. 15:127-167). In the present context the term "volatile fatty acids" or "VFA" is to be understood in accordance with the interpretation of the International Union of Pure and Applied Chemistry (IUPAC) and the American Chemical Society (ACS) as a synonym for short chain fatty acids (as opposed to medium chain and long chain fatty acids), typically fatty acids containing less than 6 carbon atoms.

The most common disturbances causing imbalance are hydraulic or organic overloading, the presence of inorganic or organic toxins or other disturbances in the process conditions such as temperature and substrate changes (Switzenbaum, M. S. et al. 1990. Enzyme. Microb. Technol. 12:722-730). Accordingly, a logical operator response to an observed disturbance causing imbalance would be to try to counteract this through changing or interrupting the feed flow or changing the reactor temperature profile, which is actually also what is done in practice. However, in order to be able to graduate the response, so as to produce the most beneficial counteraction to the observed disturbance, the operator has to have access to a process parameter reflecting the metabolic state of the process to an extend enabling such a graduated response. With the presently employed technology and control parameters this is not the case.

Several parameters have previously been suggested and used as stress indicators for monitoring anaerobic digestion processes. Important features of a good process indicator are its ability to detect imbalance at an early stage and its ability to reflect the metabolic state of the system directly. Furthermore, it is important that the relative change of the parameter following a perturbation is significant compared to background fluctuations and analysis uncertainties. Some of the most commonly used indicators include measurement of gas production, gas composition, pH and the destruction of volatile solids. In general most of these indicators are suitable for detecting gradual changes. However the changes in pH, reduction of volatile solids and gas composition are often too slow for the optimal detection of sudden changes (Slater, W. R. et al. 1990. Water Res. 24:121-123, Angelidaki, I. and B. K. Ahring. 1994. Water Res. 28:727-731).

As mentioned above anaerobic digestion depends on simultaneous formation and consumption of H₂, acetate and formate by different parts of the consortium of bacteria contributing to the process, i.e. it depends on syntrophic relations. Both the acetogenic bacteria and the methanogenic bacteria tend to have a slower growth rate than the fermentative bacteria. Furthermore the acetogenic bacteria seem to be inhibited at high concentrations of H₂ and volatile fatty acids, whereas the fermentative bacteria under such conditions will produce alcohols and longer volatile fatty acids, e.g. propionate and butyrate rather than acetate (Ahring, B. K. et al. 1990. Energistyrelsen). As a consequence specific volatile fatty acids will accumulate under conditions of imbalance, and the concentration of volatile fatty acids in the process fluid is potentially one of the most important parameters for the accurate control of anaerobic digestion (Chynoweth, D. P. and R. A. Mah. 1971. Adv. Chem. Sci. 105:41-53; Fisher, J. R. et al. 1983. Biol. Wastes. 6:147-166; Hill, D. T. and J. P. Bolthe. 1989. Biol. Wastes. 28:33-37; McCarty, P. L. and R. E. McKinney. 1961. J. Water Control. Fed. 33:223-232).

In summary, volatile fatty acids inherently play a central role in the process of anaerobic digestion, and their accumulation reflects a kinetic uncoupling between acid producers and consumers in the process of anaerobic digestion, i.e. uncoupling of syntrophic relations, and is typical of stress situations. The toxic effect of high concentrations of volatile fatty acids on the anaerobic digestion process has been studied and reported by several authors (Ahring, B. K. and P. Westermann. 1988. Appl. Environ. Microbiol. 54:2393-2397; Gorris L. G. M. et al. 1989. Biotechnol. Lett. 11:61-66; Gourdon, R. and P. Vermande. 1987. Biomass 13:1-12), and the resulting drop in pH is generally considered to be the main cause of the toxicity (Hill, D. T. 1982. Trans. ASAE 25:1374-1380; Mosey, F. E. and X. A. Fernandes. 1984. Microbiol. Methods Environ. Biotechnol. 159-169). Many investigators have correlated the process stability to the absolute concentration of volatile fatty acids in the reactor (Hill, D.T. et al. 1987. Trans. ASAE 40:496-501; Kaspar, H. F. and K. Wuhrman. 1978. Appl. Environ. Microbiol. 36:1-7; Hill, D. T. and R. D. Holmberg. 1988. Biol. Wastes. 23:195-214; Varel, V. H. et al. 1977. Appl. Environ. Microbiol. 33:298-307). However, from the many different levels of volatile fatty acids found in different reactor systems, it can be concluded that it is not feasible to define an absolute volatile fatty acid level indicating the state of the process. Different anaerobic systems have their own normal levels of volatile fatty acids, which is determined by the composition of the substrates digested or by the operating conditions (Angelidaki, I. et al. 1993. Biotechnol. Bioeng. 42:159-166), which indicates that a measurement of the total content of volatile fatty acids in the process fluid is not feasible for making a graduated response to any observed disturbance.

A chromatographic measuring system for VFA was proposed by S. Torp et al. (S. Torp et al., February 1994, "Development of an on-line gas chromatographic measuring system for volatile fatty acids (VFA) determination and automated regulation of biogas reactors with regard to specific VF acids", Energy SciTec). The necessity of filtering and acidifying the sample before analysis in a gas chromatograph was acknowledged, and a ceramic filter was used for crossflow filtration.

In another experiment reported by J. W. Paul et al. (J. W. Paul et al., 1989, "Rapid-extraction and analysis of volatile fatty acids in soil", Communications in Soil Science and Plant Analysis, vol. 20, 1989, pages 85-94), disc filters are used. However, the apparatus used is not suitable for continuous measurement, thus also not for monitoring purposes.

At present volatile fatty acid measurements as such are not used as a process parameter in full-scale biogas plants. Normally, if at all, the content of volatile fatty acids in the process fluid is estimated indirectly through a measurement of the overall content of bicarbonate and volatile acids. At present primarily two methods are used to estimate the overall content of volatile fatty acids in process fluids from full-scale biogas plants.

According to one method, based on Anderson, G. K. and G. Yang. 1992. Water Env. Res. 64:53-59, a sample of app. 5-10 g is withdrawn from the process supply (since manure, sludge or waste water are viscous and inhomogenous fluids it is not possible to withdraw an accurate volume). Next, acid is added to the sample either manually or employing an autotitrator until the pH value reaches 5.1. Assuming, that only the carbonate/CO₂ and volatile fatty acid contents of the sample influences pH and most volatile fatty acids have pKa values below 5.1, the carbonate/CO₂ content in the sample can then be indirectly determined on basis of the amount of acid added. Since, most volatile fatty acids have pKa values above 4.0, the content of volatile fatty acids in the sample is then determined on the basis of the total amount of acid, which has to be added in order to make the pH value of the sample drop to 3.5, and correcting for the amount of carbonate/CO₂ determined by the first titration step. Another method currently employed is also closely related to the one developed by Anderson and Yang (loc. cit.). As a first step it comprises manual sampling, and as a second step, acidification of samples by the addition of an amount of strong acid. Then, as a third step the acidified sample is stripped with N₂ or air in order to remove any carbonate/CO₂ present. Such a stripping procedure is time-consuming and may take about 30 min. As a fourth step, the content of volatile fatty acids is determined by back-titration to app. pH 5-6, and compared to a standard sample treated similarly, whereby the total content of volatile fatty acids is determined in equivalents (eq.) of the standard sample. In both methods the total volatile fatty acid concentration in mmol is converted to equivalents acetate (eq.) by multiplying the obtained value by 60 g/mol. In general the second method is slightly more precise than the first method, but due to the stripping procedure also more time consuming.

Several features of the currently available technology for volatile fatty acid measurement described above makes it unsuitable for use in full-scale biogas plants. Following each titration, electrodes and other equipment has to be cleaned and the pH-electrode has to be calibrated regularly. Due to the high content of particulate material and sand in manure and other types of organic waste, it is difficult to fully automate any of these methods. Typically an autotitrator is used but all other steps are done manually. Furthermore, the sequence batch loading patterns used at full scale biogas plants, and the changes in feed composition feed to the plant, changes the specific volatile fatty acid concentrations in a matter of hours. Hence, it is necessary to plan the sampling frequency in accordance with the feeding frequency and the feeding composition, which is not feasible with the currently available technology, since it involves manual preparation of samples comprising sampling and possibly centrifugation or sedimentation. Furthermore, the methods currently available have been developed for samples from a biogasreactor treating waste water with a very low content of particulate material and primarily optimized by the use of constructed/artificial samples. In accordance with this it has previously been found that the inherent uncertainty of these methods rise dramatically with increasing concentrations of carbonate/CO₂, especially when analyzing samples from biogas plants treating highly particulate organic waste (M⌀ller, H. 1997. NNR). Since the carbonate/CO₂ content in the process fluid from biogas plants treating manure or sludge typically ranges from 200 to 300 mM compared to less than 100 mM in the samples tested by Anderson and Yang, this is a very serious drawback, when trying to implement these methods. In conclusion, with present technology determinations are done using inaccurate back-titration or other semi-quantitative methods and only indirect measurements on the total content of volatile fatty acids can be obtained, which again are subject to large uncertainties because of the large carbonate/CO₂ content in the process fluids of interest. Furthermore, the presently known procedures are indirect, inaccurate, laborious, expensive and inherently off-line and time consuming, and neither do they provide an efficient control nor a short delay between process failure and operator response. Furthermore they lack the desired accuracy for determining the content of the individual volatile fatty acids in the process fluid, which would make interpretation of the data ambiguous, and accordingly they do not enable a graduated response to an observed disturbance.

### Summary of the invention

In general, the present invention provides a method and an equipment for monitoring the syntrophic relations between different parts of a bacterial consortium in the process fluid of a biological process plant, such as a biological gas plant or waste water treatment plant, through an accurate measurement of the content of the individual volatile fatty acids in consecutive samples of the process fluid, employing small quantities of process fluid. The present invention is particularly useful in cases where the biological process is an anaerobic digestion in a biological gas plant or a waste water treatment plant. More particularly, the present invention provides a solution to the problems presently faced when trying to monitor the process state of an anaerobic digestion, e.g. in waste water treatment and biological gas production, through an analysis, which makes it possible to monitor the syntrophic relations between different parts of the bacterial consortium in the process fluid, through an accurate on-line measurement of the content of the individual volatile fatty acids in consecutive samples.

Compared to the prior art analysis described above the present invention provides an applicable method for on-line determination of the content of the individual volatile fatty acids in consecutive samples of a process fluid from a biological process plant and an equipment for use in such a method, avoiding
- any manual sampling,
- centrifugation, or
- sedimentation,
   and at the same time providing
- an inherently on-line and time saving method,
- data on the content of the individual fatty acids in the process fluid,
   thereby enabling
- unambiguous data interpretation and
- efficient control, with the shortest possible delay between process failure and operator response.

It is an object of the present invention to provide a reliable method and equipment for monitoring, evaluating and controlling biological processes.

A further object of the present invention is to provide a reliable method for monitoring, evaluating and controlling anaerobic digestion processes.

A still further object of the present invention is to provide an equipment which makes efficient monitoring, evaluating and controlling of anaerobic digestion processes possible.

Still other objects and advantages of the invention will appear from the following description.

In summary the present invention relates to a method for monitoring the syntrophic relations between different parts of a bacterial consortium in the process fluid of a biological process plant, comprising the steps of:
i) withdrawing a sample of process fluid from the plant,
ii) adding acid to said sample in an amount necessary for bringing volatile fatty acids therein on free acid form,
iii) passing the acidified sample through filtering means to remove particles having a size larger than acceptable for chromatographic separation, **characterized in that** the filtration is a multi-step filtration comprising a cross flow microfiltration followed by a crossflow ultrafiltration.
iv) determining the content of volatile fatty acids in the sample from step iii) by means of an analytical procedure based on chromatographic separation, and
v) determining the syntrophic relations between different parts of the bacterial consortium in the process fluid, through an evaluation of the content of volatile fatty acids in said process fluid determined in step iv).

Furthermore the present invention relates to an equipment for monitoring the syntrophic relations between different parts of the bacterial consortium in the process fluid of a biological process plant comprising:
i) means for withdrawing a sample of process fluid from the plant,
ii) means for adding acid to said sample in an amount necessary for bringing volatile fatty acids on the free acid form,
iii) filtering means for removing all particles having a size larger than acceptable for chromatographic separation, **characterized in that** the filtration is a multi-step filtration comprising a crossflow microfiltration followed by a crossflow ultrafiltration, and
iv) chromatographic separation means for determining the content of volatile fatty acids in the sample from.

The present invention makes it possible to perform on-line continuous sampling and analysis, applicable when measuring volatile fatty acids as process indicators in biological process fluids, preferably from processes concerning the treatment of manure, sludge, organic industrial waste, domestic waste or other similar process fluids containing large and inhomogenous particles. Since the method and equipment of the present invention avoids any manual sampling, centrifugation or sedimentation, and is capable of true continuous on-line measurements of individual volatile fatty acids, in consecutive samples of biological process fluids for extended time periods, an efficient control becomes possible, with the shortest possible delay between process failure and operator response. Furthermore by the method and equipment of the present invention it is possible to use very small amounts of process fluid for a single analysis, and repeated analysis can be performed at short intervals. Still further the determination of the content of the individual fatty acids provided by the method of the present invention enables the operator to initiate a response, yielding the most beneficial counteraction to the observed disturbance. Hence, the method of the present invention provides the operator access to a process parameter that reflects the metabolic state of the process to an extend enabling a much more graduated response, than was the case with the hitherto employed technology.

In the method according to the present invention filter clogging problems, when filtering manure, waste water or sludge continuously are overcome by employing a continuous multi-step filtration comprising a crossflow microfiltration followed by a crossflow ultrafiltration. This procedure removes virtually all of the highly inhomogenous particles present in these process fluids and makes it possible to remove all particles having a diameter larger than acceptable for chromatographic separation, without employing large quantities of process fluid.

In yet a preferred embodiment of the method of the present invention a predetermined volume of acid is added to a flow of a predetermined volume of sample, preferably by the use of a common displacement pump, hence avoiding the addition of an internal standard to the acid.

In yet another preferred embodiment of the method of the present invention filter clogging problems, when transferring the sample to a means for chromatographic separation and analysis, are overcome by periodically back-flushing a cleaning fluid through the filter.

### Brief description of the drawings.

In the drawings:
Figure 1 shows a process diagram illustrating the present invention.
Figure 2 shows the results of manual measurements of the total VFA concentration in the process fluid from a biogas plant using prior art titration technology.
Figure 3 shows the result of the analysis for acetic acid and propanoic acid, in the process fluid from a biogas plant, performed according to the present invention.
Figure 4 shows the temperature development in a biogas plant.
Figure 5 shows the result of the analysis for acetic acid and propanoic acid, in the process fluid from a biogas plant, performed according to the present invention.

### Detailed description of the invention.

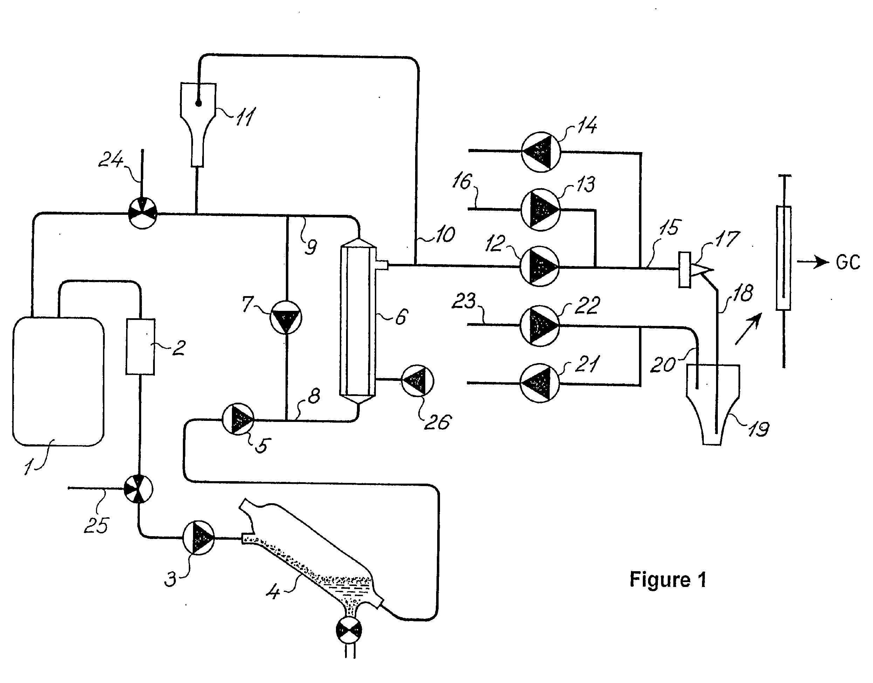

A better understanding of the present invention will be provided by reference to figure 1. In order to achieve an on-line measurement of the content of the individual volatile fatty acids in the process fluid supply, samples of process fluid are continuously withdrawn from the process fluid supply (1) of a biological process plant in a flow amounting to from about 50 to about 100 ml. per min.

In a preferred embodiment of the present invention the biological process plant described above is a biological gas plant and in another preferred embodiment it is a waste water treatment plant. The handling of process fluids from such processes, or other process fluids comprising particles with a diameter larger than about 0,2 to about 1 mm, poses special problems, when considering how to continuously withdraw samples, which can be analyzed, without causing breakdown of any key elements in the system. One of the key elements in a system providing on-line or continuous determination of a process parameter is the actual analytical procedure or instruments employed. However, analytical instruments based upon chromatographic separation, are sensitive to a high content of particles in the process fluid. Process fluids from anaerobic digestion processes, such as manure, waste water or sludge, have a high content of inhomogenous particles which makes it difficult to remove all particles with a diameter larger than acceptable for chromatographic separation through continuous one-step filtration, without employing very large quantities of process fluid, which would make any method uneconomical. Furthermore, these process fluids have a high content of organic fibers, crystalline particles, and dissolved fats, giving them grinding and clogging properties, which makes them unsuitable for traditional and proper membrane filtration. Several different means and methods for continuous one step filtration of feasible quantities of process fluids from anaerobic digestions have previously been tested. However, all of these have proven to clog, when being operated continuously, thus limiting the possible time on-line. Hence, recovery of a filtrate that can be employed in the analysis is one of the main problems in building automatic measurement systems. In accordance with the present invention this particular problem is solved by combining one or preferably several continuous micro-and ultra-filtration steps into an automatic filtration of limited volumes of process fluid. By this, the method of the present invention ensures that the content of particles in the process fluid prepared for analysis is minimized before it is passed on to sensitive measurement instruments, such as liquid chromatographs or gas chromatographs. Depending on the particle content in the considered process fluid, it may alternatively be withdrawn from the process fluid supply (1), through fewer or no filtration steps and subsequently subjected to further processing, i.e. sample treatment.

In accordance with the present invention samples of process fluid are continuously withdrawn from the process fluid supply (1), through a microfiltration unit (2), with a pore size of about 10 to about 100 µm and a filter area of about 20 to about 40 cm², by means of a pump (3). Instead of employing conventional filtration means, a rotating crossflow microfiltration unit build into the tank may be employed.

Apart from inhomogeneous particles most process fluids from anaerobic digestion processes tend to have a high content of gas (CH₄, CO₂, etc.). In order to avoid a build up of gas bubbles in the tubing of the present invention, the withdrawn, preferably micro-filtered, process fluid is passed through a means for degassing (4), before being subjected to further processing, which allows for the removal of e.g. CO₂ and larger particles from the withdrawn process fluid. Preferably this means for degassing (4) comprises a stone remover and an outlet to the atmosphere.

The advantageous combination of several continuous micro- and ultra-filtration steps according to the present invention, is obtained by pumping the withdrawn, preferably micro-filtered, most preferably micro-filtered and degassed process fluid through an ultra filter (6) at a flow of about 80 to about 100 ml/min and through tubing with an internal diameter of about 2 to about 3 mm. This is preferably done by means of an additional pump (5), which is preferably a displacement pump.

The ultrafilter (6) preferably comprises several parallel tube shaped ultrafilters, with a combined filter area of about 400 cm², and each with an internal diameter of about 1 to about 2 mm and a pore size of less than about 100.000 to about 200.000 MW. In order to achieve an adequate flow in these multiple parallel ultrafilters, the ultrafiltration preferably depends on internal recirculation amounting to about 2 to about 3 l/min of the, preferably microfiltered and most preferably microfiltered and degassed, process fluid around the ultrafilter (6). This recirculation is accomplished by the use of a pump, preferably an impeller pump (7), and preferably by employing tubing (8) with an internal diameter of about 4 to about 6 mm between the vane pump (7) and the ultrafilter (6). Furthermore, tubing (9), having an internal diameter of about 2 to about 3 mm ensuring an adequately high pressure across the ultrafilter (6), is used from the ultrafilter to the recirculation pump (7).

To minimize the amount of process fluid actually withdrawn from the process fluid supply for each analysis, the filtrate from the ultrafilter (6) is, when not passed on to sample treatment, continuously returned by tubing (10), with an internal diameter of about 1 to about 2 mm, to the remaining withdrawn, preferably microfiltered and most preferably microfiltered and degassed, process fluid, which again is returned to the process fluid supply. Since this connection between the filtrate from the ultrafilter (6) and the withdrawn process fluid poses a possible risk of contamination, it is preferably made up by a droplet catcher (11). This droplet catcher (11) serves the dual function of acting as a vent preventing any withdrawn, preferably microfiltered, process fluid from polluting the ultrafiltered process fluid, when the sampling pump (12) is switched on, and assuring a pressure drop between the ultrafilter (6) and the withdrawn process fluid, which will ensure an even flow of fluid of about 5 to about 20 ml/min through the ultrafilter, when the sampling pump (12) is switched off. This even flow of fluid ensures that the ultrafilter is continuously flushed with process fluid, which prevents it from clogging. According to the present invention, the droplet catcher (11) preferably comprises a sealed glass bulb holding a syringe shaped steel tube, wherein at least 2/3 of the bulb volume is below the point of the syringe shaped steel tube. Hence, the ultrafiltered process fluid will not be in direct contact with the withdrawn, preferably microfiltered, process fluid even when operating at high pressures.

When not in use the ultrafilter described above can be cleaned with a cleaning fluid, e.g. hot water, through the use of two vents (24 and 25) and backflushed with a similar cleaning fluid through the use of an additional pump (26).

In order to use analytical equipment based on chromatographic separation in accordance with the present invention, the sample is acidified to bring volatile fatty acids on free acid form in order to obtain reliable and accurate measurements of the individual volatile fatty acids. Hence, sample treatment of the withdrawn, preferably micro-filtered, more preferably micro-filtered and degassed, and most preferably micro-filtered, degassed and ultra-filtered, process fluid is initiated by switching on the sampling pump (12), the acid pump (13) and the waste pump (14), most preferably for as long as it takes for the tubing, preferably with an internal diameter of about 1 to about 2 mm, connecting these flows to the mixing point (15), to be flushed with newly filtered process fluid and acid from the acid supply (16).

When employing an on-line, continuous flow of sample for analysis it is crucial to know the exact relationship between added acid and sample in order to be able to convert the obtained analytical value to the value actually present in the process fluid. This may be obtained by combining the sampling pump (12) and the acid pump (13) in a shared displacement pump, whereby a predetermined volume of process fluid can be mixed with a predetermined volume of acid in a predetermined ratio, preferably 1:1, by carefully selecting the tubing of the different flows.

The above described acidification of the sample inevitably forces CO₂ out of the sample and gives rise to further precipitation. Hence before transferring the acidified sample to a means for chromatographic separation and analysis, this gas and precipitate has to be removed. Accordingly, when the tubing, connecting the flows of acid and the withdrawn, most preferably microfiltered, degassed and ultrafiltered process fluid, to the mixing point (15) has been flushed with newly filtered process fluid and acid the waste pump (14) is switched off and the overflow pump (21) is switched on, so that process fluid mixed with acid by tubing is passed through a minifilter (17), most preferably a plug flow glass filter with a pore size of about 0.4 to about 10 µm and a filter area of about 0.07 to about 0.1 cm².

When filtered through the minifilter the sample is passed through an inlet (18), most preferable formed like a syringe, to a sample vial (19) by tubing. When the sample vial (19) has been flushed with about 2 to about 3 ml of sample the sample pump (12), acid pump (13) and overflow pump (21) are switched of. To prevent that foam builds up when surplus CO₂ is liberated at the low pH as described above the sample vial (19) is preferably obconical with a height of about 15 to about 20 mm and an upper diameter of about 6 to about 7 mm, which helps to ensure a small sample volume with a large surface area of about 0.3 to about 0.5 cm². Furthermore the sample vial is preferably filled with sample till this reaches an overflow pipe (20), which is connected to the overflow pump (21) by tubing.

An adequate amount, preferably in the µl range, of the sample now ready for analysis is withdrawn from the sample vial (19), preferably using a syringe and the automatic sampling system of the applied analytical equipment depending on chromatographic separation, preferably a gas chromatograph. Alternatively the amount of sample ready for analysis may be withdrawn, through tubing connecting the sample vial to the applied analytical equipment depending on chromatographic separation. Finally the amount of sample ready for analysis may be withdrawn directly from the minifilter (17), through tubing connecting the minifilter to the applied analytical equipment depending on chromatographic separation.

The amount of sample withdrawn for analysis is transferred to the applied analytical equipment depending on chromatographic separation, preferably a gas chromatograph, and analyzed according to the specific conditions preferably used, when operating the applied analytical equipment to determine the content of volatile fatty acids in a sample, which will be well known to people skilled in the art, or which can be determined by people skilled in the art without undue experimentation.

Within minutes, depending on the actual analytical equipment and conditions employed, a determination of the content of the individual volatile fatty acids in the sample can now be obtained, and an adequate operator response can be initiated if required. The operator response to an observed imbalance, i.e. uncoupling of syntrophic relations, would preferably be to try to counteract this through i.e. changing or stopping the feed flow or changing the reactor temperature profile.

As mentioned above acidification of the sample gives rise to further precipitation. When employing an ordinary plug filter for filtration (17), this has a tendency to clog when being used continuously. Accordingly, the waste pump (14) and a base pump (22) are switched on, whereby weakly alkaline fluid from a supply (23), preferably with a pH value about 2 pH units or less above that of the process fluid, is flushed back through the sample vial (19) and the mini filter (17) by the overflow pipe (21) and the syrringe (18), thereby dissolving any precipitates or salts trapped in the minifilter. When adequate cleaning of the minifilter (17) has been accomplished the base pump (22) is switched of and the sample vial (19), the syringe (18), the minifilter (17) and the tubing leading to the waste pump are cleared for fluid. This together with the flushing sequence ensures that any leftovers from previous samples do not interfere with subsequent samples.

Following the emptying and flushing sequence described above, the method of the present invention allows for repeated determinations of the content of volatile fatty acids in consecutive samples, and consequently for continuously monitoring the syntrophic relations between different parts of the bacterial consortium in the biological process fluid. Furthermore by the method and equipment of the present invention it is possible to use less than about 2 ml of process fluid for a single analysis, and an analysis can be performed once every about 5-15 min.

The example below only serves to further illustrate the applicability of the present invention, and is not intended to represent any restriction to the invention.

### Example.

A preferred embodiment of the equipment of the present invention as described above has been tested on a full scale biogas plant in Snertinge, Denmark. The biogas plant in question treats app. 105 ton of manure and 25 ton of mixed industrial waste per day in three 1000 m³ reactors each having an active volume of app 900 m³.

### Testing:

The equipment of the present invention was placed on a recirculation loop used for two of the reactors (Reactor 2 and 3) each having a hydraulic retention time of 13.3 days. A test period lasting app. one week was used to optimize system configuration.

### Setup:

In order to maximally stress the equipment of the present invention measurements were taken every 15 min. The filter system was cleaned with hot water every second day for a period of 1-2 hours and septa and liner in the GC was changed at the same time. Just prior to the measuring period, the plant operator had initiated a slow increase in the reactor temperature to elevate the temperature from mesophilic conditions to thermophilic conditions. The plant had previously been running at 51 °C (thermophilic), but due to mixing problems the reactor temperature had dropped to mesophilic conditions for a longer period. It was expected that reactor failure could acure when reaching 42-48 °C.

### Prior art measurements:

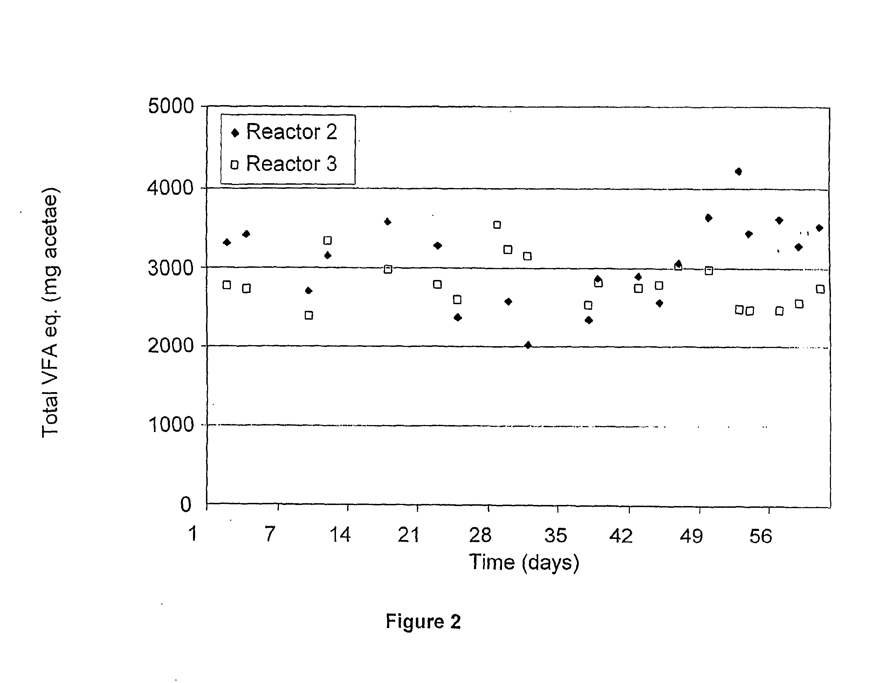

Normally the plant operator would take samples from reactor 2 and 3 twice a week to measure total VFA using a titration method, and if the eq. number was higher than 8,000-10,000 the process was considered heavy loaded or overloaded. During the test period the manual total VFA measurements done employing the currently available methodology and equipment never reached levels higher than 3,600 eq varying between 2,400-3,600 as shown in figure 2. Hence, using ordinary equipment the plant operator would therefore not consider the process to be overloaded during this period.

### Measurements in reactor 2:

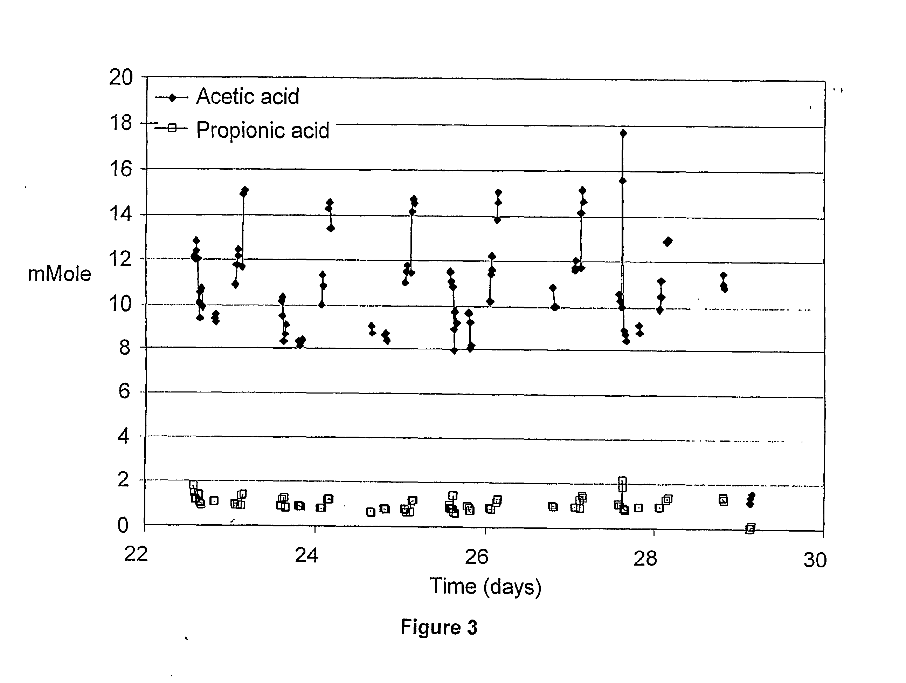

The content of reactor 2 was measured five times each 24 hours. The measurements done over a period of one week are shown in figure 3 (days are numbered with reference to figure 2).

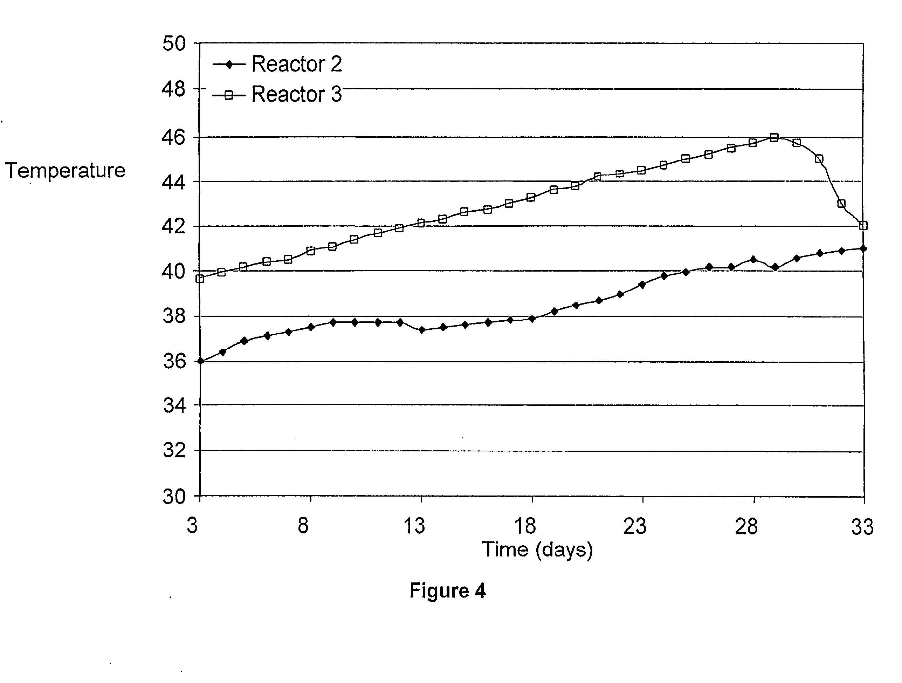

Fluctuations in Acetic acids in Reactor 2 can all be referred to the feeding of the reactor with loads containing high content of Acetic acid. Hence, the variations in Reactor 2 were not considered alarming. As can be seen from figure 4 (days are numbered with reference to figure 2) the temperature never reached the breaking point between mesophilic and thermophilic in Reactor 2.

### Measurements in reactor 3:

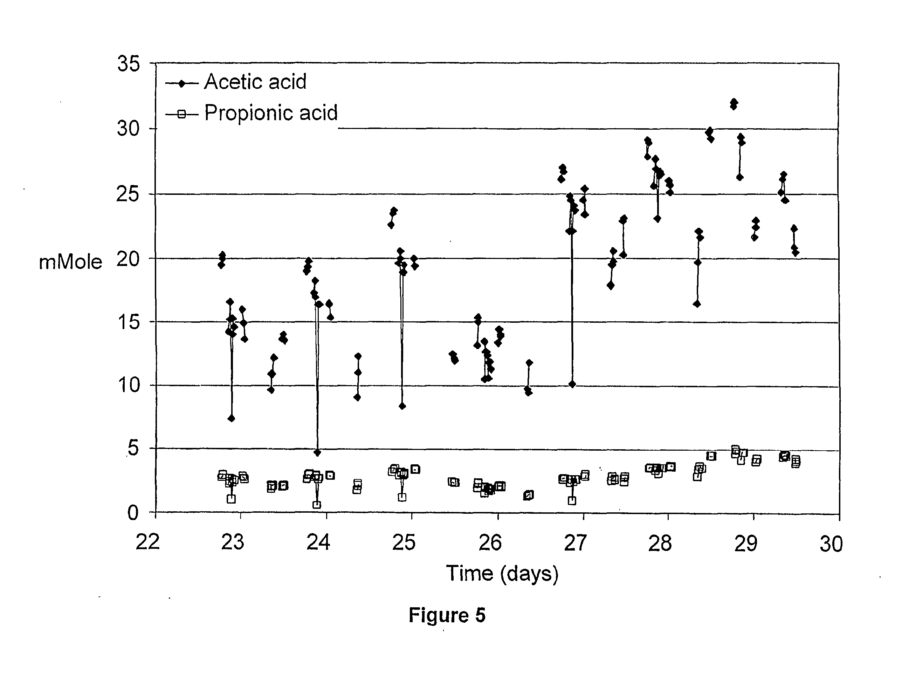

The content of reactor 3 was measured five times each 24 hours. The measurements done over a period of one week are shown in figure 5 (days are numbered with reference to figure 2).

Fluctuations in the data are due to the turning on and off of pumps in one of the measuring periods and loading of VFA containing waste. The data clearly reveals that reactor 3 is closer to instability than reactor 2, and furthermore possesses a much higher reactor temperature reaching 45 °C on the third day of the period (day 24). The gas production had been increasing from the beginning of the period from both reactors and the measurements of the total content of VFA done with currently available methodology and equipment, could not detect any increase of VFA (refer to figure 2) due to the inaccuracy of the method used. Hence, the plant operator was not able to detect the overloading of reactor 3 with the currently available methodology. However, using the precise VFA measurements made available through the methodology and equipment of the present invention, the overloading was detected and it was decided to decrease the temperature in reactor 3 until sufficient amounts of thermophilic bacteria had had time to develop at 42°-45°C before raising the temperature again. 1 month later the reactor was running stable at 51°C.

## Claims

1. A method for monitoring the syntrophic relations between different parts of a bacterial consortium in the process fluid of a biological process plant, comprising the steps of:
i) withdrawing a sample of process fluid from the plant,
ii) adding acid to said sample in an amount necessary for bringing volatile fatty acids therein on free acid form,
iii) passing the acidified sample through filtering means to remove particles having a size larger than acceptable for chromatographic separation,
iv) determining the content of volatile fatty acids in the sample from step iii) by means of an analytical procedure based on chromatographic separation, and
v) monitoring the syntrophic relations between different parts of the bacterial consortium in the process fluid, through an evaluation of the content of volatile fatty acids in said process fluid determined in step iv),
**characterised in that** the filtration is performed by crossflow microfiltration followed by crossflow ultrafiltration.

2. The method of claim 1, wherein said biological process plant is a biological gas plant.

3. The method of claim 1, wherein said biological process plant is a waste water treatment plant.

4. The method of any of claims 1-3, wherein the chromatographic separation is performed by means of a gas chromatograph.

5. The method of any of claims 1-4, wherein the sample withdrawn in step i) is filtered prior to acidification

6. The method of any of claims 1-5, wherein the sample is degassed prior to said crossflow ultrafiltration.

7. The method of any of claims 1- 6, wherein retentate from crossflow ultrafiltration is recirculated to the process fluid.

8. The method of any of claims 1-7, wherein acid in step ii) is added in a predetermined ratio of 1:1 to the sample.

9. The method of claim 8, wherein the acid is added from a supply by means of a displacement pump being shared by said acid supply and said flow of sample, respectively.

10. The method of claim 9, wherein a cleaning fluid is flushed back through the filtering means in step iii) for repeated determinations of the contents of volatile fatty acids in consecutive samples.

11. The method of claim 10, wherein said cleaning fluid has a pH value which is from 0 to 2 pH units above the pH value of said process fluid.

12. The method of any of claims 1-11, wherein samples of process fluid are periodically withdrawn and successively acidified and filtered in a conduit.

13. An equipment for monitoring the syntrophic relations between different parts of a bacterial consortium in the process fluid of a biological process plant comprising:
i) means for withdrawing a sample of process fluid from the plant,
ii) means for adding acid to said sample in an amount necessary for bringing volatile fatty acids on free acid form,
iii) filtering means for removing particles having a size larger than acceptable for chromatographic separation, and
iv) chromatographic separation means for determining the content of volatile fatty acids in the sample.
**characterised in that** the filtration means comprises means for subjecting a flow of sample of process fluid to crossflow microfiltration, and means for subjecting a flow of the filtered sample from said microfiltration to crossflow ultrafiltration.

14. The equipment of claim 13, wherein the biological process plant is a biological gas plant.

15. The equipment of claim 14, wherein the biological process plant is a waste water treatment plant.

16. The equipment of any of claims 14-15, wherein the chromatographic separation means is a gas chromatograph.

17. The equipment of any of claims 13-16, **characterised in that** it comprises interconnected flow means from said biological process plant to said filtering means for continuously withdrawing a flow of sample of process fluid.

18. The equipment of any of claims 13-17 further comprising means for filtration of samples of process fluid when withdrawn from said biological process plant.

19. The equipment of any of claims 13-18, **characterised in that** it comprises means for degassing said sample prior to ultrafiltration.

20. The equipment of any of claims 13-19, **characterised in that** it comprises a droplet catcher through which part of the filtered sample from said ultrafiltration is recirculated to the process fluid.

21. The equipment of any of claims 18-20, **characterised in that** it comprises means for recirculating part of the retentate from said ultrafiltration to the inlet for said ultrafiltration and part to the process fluid.

22. The equipment of any of claims 16-21, **characterised in that** it comprises a displacement pump being shared by said means for adding acid and said flow of sample for adding said acid to said flow of sample.

23. The equipment of claim 22, **characterised in that** it comprises an obconical sample vial equipped with an overflow pipe through which possible foam and excess flow of sample can be removed, in which the sample is collected after having passed through said additional filter.

24. The equipment of claim 23, **characterised in that** it comprises means for flushing a cleaning fluid back through said sample vial and said additional filtering means in step iii) for repeated determinations of the content of volatile fatty acids in consecutive samples.

## Patentansprüche

1. Verfahren zur Überwachung der syntropischen Beziehungen zwischen unterschiedlichen Teilen des bakteriellen Konsortiums in der Prozessflüssigkeit einer biologischen Prozessanlage, umfassend der Schritte:
i. Entnahme einer Probe der Prozessflüssigkeit aus der Anlage,
ii. Zusatz einer ausreichenden Menge von Säure zu der Probe, um volatile Fettsäuren in freie Säuren zu überführen,
iii. Durchfluss der angesäuerten Probe durch Filterhilfsmittel zur Entfernung von Partikeln, die eine inakzeptable Größe für chromatographische Trennungsverfahren aufweisen,
iv. Feststellung des Gehalts volatiler Fettsäuren aus Schritt iii in der Probe durch ein analytisches Verfahren, basierend auf chromatographischer Trennung, und
v. Überwachung der syntropischen Beziehungen zwischen unterschiedlichen Teilen des bakteriellen Konsortiums in der Prozessflüssigkeit durch Evaluierung des Gehaltes flüchtiger Fettsäuren in der Prozessflüssigkeit wie festgestellt in Schritt iv,
**dadurch gekennzeichnet, dass** die Filtration eine Kreuzflussmikrofiltration mit anschließender Kreuzflussultrafiltration ist.

2. Verfahren nach Anspruch 1, **dadurch gekennzeichnet, dass** die biologische Prozessanlage eine biologische Gasanlage ist.

3. Verfahren nach Anspruch 1, **dadurch gekennzeichnet, dass** die biologische Prozessanlage eine Anlage zur Behandlung von Abwasser ist.

4. Verfahren nach einem der Ansprüche 1 bis 3, **dadurch gekennzeichnet, dass** das chromatographische Trennungsverfahren eine Gaschromatographie ist.

5. Verfahren nach einem der Ansprüche 1 bis 4, **dadurch gekennzeichnet, dass** die in Schritt i entnommene Probe vor der Ansäuerung gefiltert wurde.

6. Verfahren nach einem der Ansprüche 1 bis 5, **dadurch gekennzeichnet, dass** die Probe vor der Kreuzflussultrafiltration entgast wurde.

7. Verfahren nach einem der Ansprüche 1 bis 6, **dadurch gekennzeichnet, dass** der Überstand der Kreuzflussultrafiltration in die Prozessflüssigkeit rückgeführt wird.

8. Verfahren nach einem der Ansprüche 1 bis 7, **dadurch gekennzeichnet, dass** die Säure aus Schritt ii in einem vorbestimmten Verhältnis von 1:1 der Probe zugeführt wird.

9. Verfahren nach Anspruch 8, **dadurch gekennzeichnet, dass** die Säure aus einem Zufluss mittels einer Verdrängungspumpe zugeführt wird, die gemeinsam von dem Säurezufluss sowie dem Probenfluss genutzt wird.

10. Verfahren nach Anspruch 9, **dadurch gekennzeichnet, dass** eine Reinigungsflüssigkeit durch die Filterhilfsmittel aus Schritt iii rückgespült wird, um wiederholt den Anteil volatiler Fettsäuren in aufeinander folgenden Proben festzustellen.

11. Verfahren nach Anspruch 10, **dadurch gekennzeichnet, dass** die Reinigungsflüssigkeit einen pH-Wert aufweist, der 0 bis 2 Einheiten höher ist als der pH-Wert der Prozessflüssigkeit.

12. Verfahren nach einem der Ansprüche 1 bis 11, **dadurch gekennzeichnet, dass** Proben der Prozessflüssigkeit periodisch entnommen werden und aufeinander folgend in einem Kanal angesäuert und gefiltert werden.

13. Gerät zur Überwachung der syntropischen Beziehungen zwischen unterschiedlichen Teilen des bakteriellen Konsortiums in der Prozessflüssigkeit einer biologischen Prozessanlage, umfassend
i. Hilfsmittel zur Entnahme einer Probe der Prozessflüssigkeit aus der Anlage,
ii. Hilfsmittel zur Zuführung der notwendigen Menge von Säure zur genannten Probe, um flüchtige Fettsäuren in freie Säuren zu überführen,
iii. Filterhilfsmittel zur Entfernung von Partikeln einer Größe, die für die chromatographische Trennung inakzeptabel ist, und
iv. Hilfsmittel zur chromatographischen Trennung, um den Gehalt flüchtiger Fettsäuren in der Probe zu bestimmen,
**dadurch gekennzeichnet, dass** die Filtrationshilfsmittel Hilfsmittel umfassen, welche einen Probenfluss der Prozessflüssigkeit einer Kreuzflussmikrofiltration unterziehen, sowie Hilfsmittel umfassen, die einen Fluss filtrierter Probenflüssigkeit aus der Mikrofiltration einer Kreuzflussultrafiltration unterziehen.

14. Gerät nach Anspruch 13, **dadurch gekennzeichnet, dass** die biologische Prozessanlage eine biologische Gasanlage ist.

15. Gerät nach Anspruch 14, **dadurch gekennzeichnet, dass** die biologische Prozessanlage eine Anlage zur Behandlung von Abwasser ist.

16. Gerät nach einem der Ansprüche 14 bis 15, **dadurch gekennzeichnet, dass** das Hilfsmittel zur chromatographischen Trennung ein Gaschromatograph ist.

17. Gerät nach einem der Ansprüche 13 bis 16, umfassend einen gekoppelten Fluss ausgehend von der biologischen Prozessanlage hin zu den Filterhilfsmitteln, um kontinuierlich Probenflüssigkeit zu entnehmen.

18. Gerät nach einem der Ansprüche 13 bis 17, umfassend ein Hilfsmittel zur Filtration von Proben der Prozessflüssigkeit, sobald sie der biologischen Prozessanlage entnommen wurden.

19. Gerät nach einem der Ansprüche 13 bis 18, umfassend eines Hilfsmittels zur Entgasung der Probe vor der Ultrafiltration.

20. Gerät nach einem der Ansprüche 13 bis 19, umfassend einen Tropfenabscheider, durch den Anteile der filtrierten Probe aus der Ultrafiltration in den Probenfluss rückgeführt werden.

21. Gerät nach einem der Ansprüche 18 bis 20, umfassend Hilfsmittel zur Rückführung von Anteilen des Überstandes aus der Ultrafiltration in den Einlass zur Ultrafiltration, sowie in Teilen in die Prozessflüssigkeit.

22. Gerät nach einem der Ansprüche 16 bis 21, umfassend einer Verdrängungspumpe, die gemeinsam von den Hilfsmitteln zur Zuführung von Säure sowie des Probenflusses genutzt wird, zur Zuführung der Säure.

23. Gerät nach Anspruch 22, umfassend ein obkonisches Probengefäß, ausgerüstet mit einem Überlaufrohr, durch das auftretender Schaum und überschüssiger Probenfluss abgeführt werden kann, in dem die Probe aufgefangen wird, nachdem sie den zusätzlichen Filter durchflossen hat.

24. Gerät nach Anspruch 23, umfassend Hilfsmittel zur Rückspülung einer Reinigungsflüssigkeit durch das Probengefäß und die zusätzlichen Filterhilfsmittel aus Schritt iii, um wiederholt den Anteil flüchtiger Fettsäuren aufeinander folgender Proben festzustellen.

## Revendications

1. Procédé de contrôle des relations syntropiques entre les différentes parties d'un consortium bactérien dans le fluide de procédé d'une usine de procédés biologiques, comprenant les étapes consistant à :
i) prélever un échantillon du liquide de procédé de l'usine,
ii) ajouter de l'acide audit échantillon en quantité nécessaire pour donner aux acides gras volatils contenus dans celui-ci une forme acide libre,
(iii) passer l'échantillon acidifié à travers un moyen de filtration pour éliminer les particules ayant une dimension supérieure à la limite acceptable pour la séparation chromatographique,
(iv) déterminer la teneur en acides gras volatils dans l'échantillon de l'étape iii) par le biais d'une procédure analytique basée sur la séparation chromatographique, et
(v) contrôler les relations syntropiques entre les différentes parties du consortium bactérien dans le fluide de procédé, par le biais d'une évaluation de la teneur en acides gras volatils dans ledit fluide de procédé déterminée dans l'étape iv),
**caractérisé en ce que** la filtration est effectuée par microfiltration transversale suivie d'une ultrafiltration transversale.

2. Procédé selon la revendication 1, dans lequel ladite usine de procédés biologiques est une usine de gaz biologiques.

3. Procédé selon la revendication 1, dans lequel ladite usine de procédés biologiques est une usine de traitement des eaux usées.

4. Procédé selon l'une quelconque des revendications 1 à 3, dans lequel la séparation chromatographique est effectuée par le biais d'un chromatographe en phase gazeuse.

5. Procédé selon l'une quelconque des revendications 1 à 4, dans lequel l'échantillon prélevé dans l'étape i) est filtré avant l'acidification.

6. Procédé selon l'une quelconque des revendications 1 à 5, dans lequel l'échantillon est dégazé avant ladite ultrafiltration transversale.

7. Procédé selon l'une quelconque des revendications 1 à 6, dans lequel le rétentat issu de l'ultrafiltration transversale est remis en circulation dans le fluide de procédé.

8. Procédé selon l'une quelconque des revendications 1 à 7, dans lequel l'acide de l'étape ii) est ajouté selon un rapport prédéterminé de 1/1 à l'échantillon.

9. Procédé selon la revendication 8, dans lequel l'acide est ajouté depuis une alimentation au moyen d'une pompe volumétrique partagée par ladite alimentation en acide et ledit écoulement d'échantillon, respectivement.

10. Procédé selon la revendication 9, dans lequel un fluide de nettoyage est purgé à travers le moyen de filtration dans l'étape iii) pour des déterminations répétées des teneurs en acides gras volatils dans des échantillons consécutifs.

11. Procédé selon la revendication 10, dans lequel ledit liquide de nettoyage a une valeur pH comprise entre 0 et 2 unités de pH au-dessus de la valeur pH dudit fluide de procédé.

12. Procédé selon l'une quelconque des revendications 1 à 11, dans lequel des échantillons de fluide de procédé sont périodiquement prélevés et successivement acidifiés et filtrés dans une conduite.

13. Appareil de contrôle des relations syntropiques entre différentes parties d'un consortium bactérien dans le fluide de procédé d'une usine de procédés biologiques comprenant :
i) un moyen de prélèvement d'un échantillon de fluide de procédé de l'usine,
ii) un moyen d'ajout d'acide audit échantillon dans une quantité nécessaire pour donner aux acides gras volatils contenus dans celui-ci une forme acide libre,
iii) un moyen de filtration pour éliminer les particules ayant une dimension supérieure à la limite acceptable pour la séparation chromatographique, et
iv) un moyen de séparation chromatographique pour déterminer la teneur en acides gras volatils dans l'échantillon,
**caractérisé en ce que** le moyen de filtration comprend un moyen de soumission d'un écoulement d'échantillon de fluide de procédé à une microfiltration transversale, et un moyen de soumission d'un écoulement de l'échantillon filtré issu de ladite microfiltration à une ultrafiltration transversale.

14. Appareil selon la revendication 13, dans lequel l'usine de procédés biologiques est une usine de gaz biologiques.

15. Appareil selon la revendication 14, dans lequel l'usine de procédés biologiques est une usine de traitement des eaux usées.

16. Appareil selon l'une quelconque des revendications 14 à 15, dans lequel le moyen de séparation chromatographique est un chromatographe en phase gazeuse.

17. Appareil selon l'une quelconque des revendications 13 à 16, **caractérisé en ce qu'**il comprend un moyen d'écoulement interconnecté allant de l'usine de procédés biologiques audit moyen de filtration pour prélever en continu un écoulement d'échantillon de fluide de procédé.

18. Appareil selon l'une quelconque des revendications 13 à 17, comprenant en outre un moyen de filtration des échantillons de fluide de procédé lorsqu'ils sont prélevés de ladite usine de procédés biologiques.

19. Appareil selon l'une quelconque des revendications 13 à 18, **caractérisé en ce qu'**il comprend un moyen de dégazage dudit échantillon avant l'ultrafiltration.

20. Appareil selon l'une quelconque des revendications 13 à 19, **caractérisé en ce qu'**il comprend un dévésiculeur à travers lequel une partie de l'échantillon filtré issu de ladite ultrafiltration est remise en circulation dans le fluide de procédé.

21. Appareil selon l'une quelconque des revendications 18 à 20, **caractérisé en ce qu'**il comprend un moyen de remise en circulation d'une partie du rétentat issu de ladite ultrafiltration dans l'orifice d'entrée pour ladite ultrafiltration et une partie du fluide de procédé.

22. Appareil selon l'une quelconque des revendications 16 à 21, **caractérisé en ce qu'**il comprend une pompe volumétrique partagée par ledit moyen d'ajout d'acide et ledit écoulement d'échantillon pour ajouter ledit acide dans ledit écoulement d'échantillon.

23. Appareil selon la revendication 22, **caractérisé en ce qu'**il comprend un flacon d'échantillonnage obconique équipé d'un tuyau de trop-plein à travers lequel l'éventuelle mousse et l'excédent d'écoulement d'échantillon peuvent être éliminés, dans lequel l'échantillon est collecté après être passé à travers ledit filtre supplémentaire.

24. Appareil selon la revendication 23, **caractérisé en ce qu'**il comprend un moyen de purge d'un fluide de nettoyage à travers ledit flacon d'échantillonnage et ledit moyen de filtration supplémentaire dans l'étape iii) pour des déterminations répétées de la teneur en acides gras volatils dans des échantillons consécutifs.
